# EUROPÄISCHE PATENTSCHRIFT

(11) **EP 3 717 940 B1**
(45) Veröffentlichungstag und Bekanntmachung des Hinweises auf die Patenterteilung: **20.11.2024**
(21) Anmeldenummer: 18833598.8
(22) Anmeldetag: 26.11.2018
(51) Int. Cl.: G01V 1/38

(54) **SEISMISCHES DREIDIMENSIONALES VERMESSUNGSVERFAHREN KLEINER OBJEKTE, SEEKABEL UND DERGLEICHEN IM MEERESBODEN SOWIE SYSTEM AUS SEEGANGSUNABHÄNGIGEM SCHLEPPKÖRPER UND MODULAREM GERÄTETRÄGER FÜR DIE ULTRA-HOCHAUFLÖSENDE 3D VERMESSUNG KLEINER STRUKTUREN IM MEERESBODEN**
SEISMIC THREE-DIMENSIONAL MEASUREMENT METHOD FOR SMALL OBJECTS, SUBMARINE CABLES AND THE LIKE IN THE SEA BED AS WELL AS SYSTEM OF SEA SWELL INDEPENDENT TOWED BODY AND MODULAR DEVICE CARRIER FOR THE ULTRA-HIGH RESOLUTION 3D MEASUREMENT OF SMALL STRUCTURES IN THE SEA BED
EPROCÉDÉ DE REPÉRAGE TRIDIMENSIONNEL SISMIQUE DE PETITS OBJETS, DE CÂBLES SOUS-MARINS ET ANALOGUES SUR LES FONDS MARINS, ET SYSTEME DE CORPS REMORQUÉ INDÉPENDANT DE LA HOULE ET SUPPORT D'APPAREIL MODULAIRE POUR REPÉRER EN 3D ULTRA-HAUTE DÉFINITION DE PETITES STRUCTURES SUR LES FONDS MARINS

(30) Priorität: 28.11.2017 DE 102017128159; 28.11.2017 DE 102017128161; 28.11.2017 DE 102017128160
(43) Veröffentlichungstag der Anmeldung: 07.10.2020
(73) Patentinhaber: Geomar Helmholtz-Zentrum für Ozeanforschung Kiel, 24148 Kiel (DE)
(72) Erfinder: BIALAS, Jörg, 24226 Heikendorf (DE); BERNDT, Christian, 24116 Kiel (DE); VOLZ, Martin, 24229 Schwedeneck (DE); EISENBERG-KLEIN, Gerald, 30659 Hannover (DE)
(74) Vertreter: Puschmann Borchert Kaiser Klettner Patentanwälte Partnerschaft mbB
(86) Internationale Anmeldenummer: PCT/DE2018/100959
(87) Internationale Veröffentlichungsnummer: WO 2019/105510

(56) Entgegenhaltungen:
- US-A- 4 924 449
- US-A- 4 924 449
- US-A1- 2005 180 260
- US-A1- 2005 180 260
- US-A1- 2013 258 811
- US-A1- 2013 258 811

## Beschreibung

Die Erfindung betrifft ein seismisches dreidimensionales Vermessungsverfahren kleiner Objekte, Seekabel, anderer Störkörper, archäologische Bauten, Felsen oder gering mächtiger Ablagerungshorizonte, Massivsulfide im Meeresboden nach Anspruch 1, , wobei ein modularer Geräteträger mit einem definierten Sensorrahmen mit mindestens zwei, quer zur Schlepprichtung orientierten, Reihen einzelner seismischer und/oder akustischer Signalempfänger oder Gruppen von Signalempfängern, mindestens einer seismischen und/oder akustischen Signalquelle im Zentrum oder mindestens zwei seismischen und/oder akustischen Signalquellen an den Außenseiten des Sensorrahmens, als jeweilige Signalgeber, einem oder mehreren Antrieben oder Steuerklappen, die eine Positionskontrolle des Sensorrahmens im Raum ermöglichen, einer nicht summierenden online Übertragungsvorrichtung zur Übertragung der Messwerte der einzelnen Empfänger zu einem Mutterschiff, einer online Übertragungsvorrichtung zur online Übertragung der Position des Sensorrahmens im Raum gemessen anhand wenigstens eines Bewegungssensors, einer online Steuerungsvorrichtung zur Steuerung und Positionskorrektur des Sensorrahmens im Raum ausgebildet ist, eine nicht summierende online Übertragung der Messwerte der einzelnen Empfänger zu einem Mutterschiff erfolgt und eine online Übertragung der Position des Sensorrahmens im Raum gemessen anhand wenigstens eines Bewegungssensors erfolgt.

Die Erfindung betrifft weiter ein System nach Anspruch 5 aus einem seegangsunabhängigem Schleppkörper und einem modularem Geräteträger für die ultra-hochauflösende 3D Vermessung kleiner Strukturen im Meeresboden, wobei der Schleppkörper als Überwasserträger des modularen Geräteträgers ausgebildet ist.

Bei der Verlegung von Seekabeln (Strom, Telefonie, etc.) besteht die Auflage diese in mindestens 1,5 m Tiefe unter dem Meeresboden zu vergraben. Die erfolgreiche Tiefenverlegung muss nach Abschluss der Arbeiten nachgewiesen werden. Wiederholungsmessungen sind im Abstand von 2 Jahren, später 4 Jahren, durchzuführen. Übliche Detektionstiefen sind zwischen 0 - 6 m, ausnahmsweise auch bis zu 10 m zu erwarten. Bisherige Verfahren arbeiten mit Magnetfeldvermessung oder akustischer Vermessung. Die Geräteträger werden am Schiff oder ROV (Remotely Operating Vehicle = selbstfahrendes Unterwasserfahrzeug) montiert (z.B. pangeo, SubSea) oder an der Meeresoberfläche geschleppt (z.B. GeoChirp3D, Kongsberg). Die Systeme verfügen über einen nur wenige Meter breiten Vermessungsfächer und sind somit anfällig gegenüber Kursabweichungen durch Strömung oder Verschwenkungen der Kabeltrasse. An der Meeresoberfläche geschleppte Geräteträger sind anfällig gegenüber Seegang. Bei den eingesetzten Signalfrequenzen im kHz-Bereich ist eine mindestens zentimetergenaue Lagebestimmung der Empfänger notwendig, die in üblicher Seegangsbewegung kaum oder schwer zu erzielen ist.

Die Magnetfeldmessung für stromführende Kabel scheitert an der fehlenden Vorhersagbarkeit bzw. Auswertbarkeit der zu erwartenden Anomalie. Bei der Kabelfertigung eingebrachte Magnetfeldprägungen können nur im stromlosen Zustand vermessen werden und erlauben eine Detektion nur bis ca. 1,8 m Vergrabungstiefe. Besonders in Sandlagen kann das Kabel häufiger bis 2 m absacken und ist dann mit diesem Verfahren nicht mehr nachweisbar. Akustische Verfahren können die Kabel bisher nur auf kreuzenden Profilen gut abbilden. Daher erfolgen diese Messungen nur punktuell. Zwischen den Messpunkten wird unter Berücksichtigung der Biegesteifigkeit des Kabels interpoliert. Das akustische pangeo system ist zwar für die profilhafte Vermessung entlang der Kabeltrasse konzipiert, kann aber aufgrund der geringen Fächerbreite die Vergrabungstiefe entlang der Kabeltrasse nur punktuell an Stellen optimaler Messbedingungen verfolgen.

Aus dem **Stand der Technik** sind die folgenden Druckschriften bekannt:
- Patent AU 2011279350: Strukturerkennung im marinen Untergrund anhand gekreuzter seismischer Transduceranordnung;
- Patent US 2013/0258811: Apparatur zur Abbildung des marinen Untergrundes - gleiche Sender - Empfängeranordnung, geodätische Positionierung über Transponder, bedarf aber abweichend zur hier vorgelegten Erfindung eines Bodenfahrzeugs für Messungen in vordefiniertem Abstand, in Verbindung mit gekreuzter Einweg-Messkette auf dem Meeresboden, in Verbindung mit kohärenter Stapelung der Empfangssignale schon in der Empfangseinheit auf dem Geräteträger;
- Patent US 8,125,850, US 8,391,103, US 2012/0008461: Akustisches Array wird auf dem Meeresboden ausgelegt;
- Patent WO 2012/006712: Methode der seismischen Bestimmung akustischer Eigenschaften des Meeresbodens in Verbindung mit dem Pumpen von Flüssigkeiten.

Die WO 2016 / 089 258 A1 zeigt ein elektromagnetisches Sensorsystem zur Bomben- und Seeminensuche am Meeresgrund mit einem Sensorenzugfahrzeug und einer Reihe von Sensoren und einem Deflektor, die jeweils an einem Kabel über den Meeresgrund gezogen werden.

Die DE 10 2012 006 566 A1 zeigt ein Verfahren zur Detektion von Seeminen sowie ein Seeminendetektionssystem durch ein autonomes Unterwasserfahrzeug mit Sonar.

Ferner sind aus dem Stand der Technik folgende Druckschriften bekannt:
- GeoChirp3D von Fa. Kongsberg
- P-Cable US Patent 7,221,620 B2
- Sub-Bottom Imager von Fa. Pangeo Subsea

Weiter ist aus der US 4,924,449 ein positionierbares Transducer-Array auf einer stationären Plattform in der Nähe einer geschichteten Stelle auf dem Meeresboden bekannt, das Punkte an der Stelle kohärent mit einem Signal beschallt, das eine ausgewählte Leistung, resultierende Mittenfrequenz, Strahlbreite, Bandbreite, Form und Einfallswinkel hat, wobei ein positionierbares Empfängerarray auf der Plattform die Rücklaufsignale einfängt. Aus den Rücklaufsignalen und einer Berechnung der Schallgeschwindigkeit im Wasser am Standort werden dann die unterirdischen akustischen Eigenschaften des Standortes vorausberechnet. Nachfolgende Standorte am Einsatzort werden dann batchweise abgefragt und die Interpretation der akustischen Eigenschaften erfolgt durch Interpolation der Eigenschaften am Standort.

Die Druckschrift US 2005/180260 A1 offenbart eine Vorrichtung für dreidimensionale einkanalige seismische Messungen, bei der mindestens eine seismische Quelle und Hydrophonvorrichtungen hinter einem Schiff geschleppt werden, und bei der ein Paar von Deflektoren verwendet wird, die im Meer eingetaucht sind und die sich bei der Bewegung des Schiffes in einer Richtung quer zur Fahrtrichtung des Schiffes zu bewegen suchen. Zwischen den Ablenkern ist ein Draht befestigt, der den Abstand zwischen den Ablenkern begrenzt. Entlang des Drahtes sind auch Hydrophonvorrichtungen angebracht, die im Verhältnis zum Abstand der Vorrichtungen eine kurze Längserstreckung aufweisen. Die Geräte sind durch ein Hydrophonsignalkabel miteinander verbunden. Ein weiteres Signalkabel verbindet das Kabel mit der Signalverarbeitungsanlage auf dem Schiff. Die seismische Quelle kann an die Signalausrüstung auf dem Schiff angeschlossen sein und sich in einem Bereich zwischen dem Schiff und dem Kabel befinden, oder mindestens einer der Deflektoren kann mit einer seismischen Quelle ausgestattet sein.

Zudem ist aus der Druckschrift US 2013/258811 A1 ein Verfahren zum Abbilden von Formationen unterhalb des Bodens eines Wasserkörpers beinhaltend das Einbringen von Schallenergie in die Formationen entlang einer vorbestimmten Schwadenlänge an einer ausgewählten geodätischen Position bekannt. Die von den Formationen reflektierte akustische Energie wird entlang einer Linie, die parallel zur Länge des Streifens verläuft, erfasst. Die ausgewählte geodätische Position wird um eine ausgewählte Strecke quer zur Länge des Schwadens verschoben. Die Übertragung von Schallenergie, die Erfassung von Schallenergie und die Bewegung der geodätischen Position werden wiederholt, bis eine ausgewählte Strecke quer zur Länge des Schwadens zurückgelegt ist. Die detektierte Schallenergie von allen ausgewählten geodätischen Positionen wird kohärent gestapelt. Die detektierte Schallenergie wird auf eine Vielzahl von Tiefen und Positionen entlang der Schwadlänge gelenkt, um ein Bild für jede dieser Tiefen und Positionen zu erzeugen.

Mit Hinweis auf das Wissen des hier zuständigen Fachmanns wird nachfolgend erläuternd, aber nicht zwingend beschränkend ausgeführt:
Unter dem Begriff "seismisch" wird, im Zusammenhang mit seismischen Signalgebern oder seismischen Signalempfängern, jede Art von die Seismik betreffende Instrumente und Messungen verstanden, wobei auf Wikipedia allgemein verwiesen wird, nämlich wobei die Seismik (auch Geoseismik) ein Teilgebiet der angewandten Geophysik ist und Methoden umfasst, welche die obere Erdkruste durch künstlich angeregte seismische Wellen erforschen und grafisch bzw. digital abbilden, wobei zwischen Landseismik, die am Festland eingesetzt wird, und Seeseismik, die auf Wasseroberflächen Anwendung findet, unterschieden wird.

Weiter wird unter dem Begriff "nicht summierenden ... Übertragung der Messwerte" im Unterschied zu einer "normalen" Übertragung von Messewerten, insbesondere mit Protokoll und in Blöcken, eine explizite signalbezogen getrennte Übertragung von Messwerten verstanden.

Im Weiteren wird unter dem Begriff "online Übertragung von Messwerten" bzw. mit dem Begriff "online" eine betriebsbereite Verbindung über ein Kommunikationsnetzwerk, hier von Messwerten, verstanden.

Als "online Übertragung einer Position" wird eine betriebsbereite Verbindung über ein Kommunikationsnetzwerk, hiervon Positionsdaten, verstanden.

Unter dem Begriff "Mutterschiff" als Fahrzeug allgemein, wird ein größeres Fahrzeug, z.B. ein Schiff, das kleinere Fahrzeuge, z.B. ein Boot, U-Boot oder dergl., begleitet und als Stützpunkt, z.B. zur Versorgung und für Reparaturen dient, betrachtet.

Nachfolgend unter dem Begriff "Parallelprofile" die Art und Weise der messtechnischen Anlage von geophysikalischen Profilen verstanden, die äquidistant zueinander in der Fläche bzw. im Raum angelegt werden.

Ferner wird unter den nachfolgenden Begriffe verstanden:
- "3D Datenvolumen" - die datentechnische Bezugnahme auf ein Voxel, die bevorzugt in einem geophysikalischen Geoinformationssystem verwaltet werden;
- "Ghost-Signal" - ein Geisterbild, welches durch schwache Kopien von Signalen entsteht, die gegenüber dem Hauptsignal zumeist (räumlich, zeitlich) versetzt entstehen;
- "Erkennung" - ein kognitiver Prozess, in dem wahrgenommene Signale einem bekannten Fakt zugeordnet werden;
- "geographische Positionsinformationen" - den Standort eines Geräts oder Teilnehmers in einem System, z.B. GPS (Global Positioning System) betreffend;
- "Lage- und Navigationsinformationen" - die Lage und Navigationsinformation eines Geräts oder Teilnehmers relativ zu einem definierten System, z.B. GPS (Global Positioning System);
- "Lagesensor" - Sensor, der die relative Lage eines Geräts oder Teilnehmers in Bezug zu einem definierten System misst und/oder erfasst;
- "Long-Baseline Installation" - eine Messbasislinie, auf die bei einer Messung Bezug genommen wird;
- "automatische Auswertung" - eine gesteuerte oder geregelte Verarbeitung von Informationen ohne Einwirkung des menschlichen Geistes;
- "Antriebskörper" - ein dreidimensionaler Körper, der zumindest einen Antrieb aufnehmen kann;
- "Gerätekörper" - ein dreidimensionaler Körper, der zumindest ein Gerät, z.B. einen Sensor oder dergl. aufnehmen kann;
- "Steuerungselemente"- Elemente eines Regelkreises oder Folgeregelkreises, die steuern;
- "automatisch nachgeregelt" - eine geregelte Verarbeitung von Informationen ohne Einwirkung des menschlichen Geistes;
- "Kursfolge" - eine navigationstechnischer Kurs, der auch mehrere gekoppelte Kurse in Folge aufweisen kann.

Die **Probleme im Stand der Technik** sind im Wesentlichen, dass bei der Verlegung von Seekabeln (Strom, Telefonie, etc.) die Auflage besteht, diese in mindestens 1,5 m Tiefe unter dem Meeresboden zu vergraben. Die erfolgreiche Tiefenverlegung muss nach Abschluss der Arbeiten nachgewiesen werden. Wiederholungsmessungen sind im Abstand von 2 Jahren, später 4 Jahren durchzuführen. Übliche Detektionstiefen sind zwischen 0 - 6 m, ausnahmsweise auch bis zu 10 m zu erwarten.

Bisherige Verfahren arbeiten mit Magnetfeldvermessung oder akustischer Vermessung. Die Geräteträger werden am Schiff oder ROV (Remotely Operating Vehicle = selbstfahrendes Unterwasserfahrzeug) montiert (z.B. pangeo, SubSea) oder an der Meeresoberfläche geschleppt (z.B. GeoChirp3D, Kongsberg). Die Systeme verfügen über einen nur wenige Meter breiten Vermessungsfächer und sind somit anfällig gegen Kursabweichungen durch Strömung oder Verschwenkungen der Kabeltrasse. An der Meeresoberfläche geschleppte Geräteträger sind anfällig gegenüber Seegang. Bei den eingesetzten Signalfrequenzen im kHz-Bereich ist eine mindestens zentimetergenaue Lagebestimmung der Empfänger notwendig, die in üblicher Seegangsbewegung kaum oder schwer zu erzielen ist.

Die Magnetfeldmessung für stromführende Kabel scheitert an der fehlenden Vorhersagbarkeit bzw. Auswertbarkeit der zu erwartenden Anomalie. Bei der Kabelfertigung eingebrachte Magnetfeldprägungen können nur im stromlosen Zustand vermessen werden und erlauben eine Detektion nur bis ca. 1,8 m Vergrabungstiefe. Besonders in Sandlagen kann das Kabel häufiger bis 2 m absacken und ist dann mit diesem Verfahren nicht mehr nachweisbar. Akustische Verfahren können die Kabel bisher nur auf kreuzenden Profilen gut abbilden. Daher erfolgen diese Messungen nur punktuell. Zwischen den Messpunkten wird unter Berücksichtigung der Biegesteifigkeit des Kabels interpoliert. Das akustische pangeo system ist zwar für die profilhafte Vermessung entlang der Kabeltrasse konzipiert, kann aber aufgrund der geringen Fächerbreite die Vergrabungstiefe entlang der Kabeltrasse nur punktuell an Stellen optimaler Messbedingungen verfolgen.

Weitere im Stand der Technik bekannte Probleme sind im Wesentlichen, dass bei der Verlegung von Seekabeln (Strom, Telefonie, etc.) die Auflage besteht, diese in mindestens 1,5 m Tiefe unter dem Meeresboden zu vergraben. Die erfolgreiche Tiefenverlegung muss nach Abschluss der Arbeiten nachgewiesen werden. Wiederholungsmessungen sind im Abstand von 2 Jahren, später 4 Jahren durchzuführen. Übliche Detektionstiefen sind zwischen 0 - 6 m, ausnahmsweise auch bis zu 10 m zu erwarten.

Bisherige Verfahren arbeiten mit Magnetfeldvermessung oder akustischer Vermessung. Die Geräteträger werden am Schiff oder ROV (Remotely Operating Vehicle = selbstfahrendes Unterwasserfahrzeug) montiert (z.B. pangeo, SubSea) oder an der Meeresoberfläche geschleppt (z.B. GeoChirp3D, Kongsberg). Die Systeme verfügen über einen nur wenige Meter breiten Vermessungsfächer und sind somit anfällig gegen Kursabweichungen durch Strömung oder Verschwenkungen der Kabeltrasse. An der Meeresoberfläche geschleppte Geräteträger sind anfällig gegenüber Seegang. Bei den eingesetzten Signalfrequenzen im kHz-Bereich ist eine mindestens zentimetergenaue Lagebestimmung der Empfänger notwendig, die in üblicher Seegangsbewegung kaum oder schwer zu erzielen ist.

Die Magnetfeldmessung für stromführende Kabel scheitert an der fehlenden Vorhersagbarkeit bzw. Auswertbarkeit der zu erwartenden Anomalie. Bei der Kabelfertigung eingebrachte Magnetfeldprägungen können nur im stromlosen Zustand vermessen werden und erlauben eine Detektion nur bis ca. 1,8 m Vergrabungstiefe. Besonders in Sandlagen kann das Kabel häufiger bis 2 m absacken und ist dann mit diesem Verfahren nicht mehr nachweisbar. Akustische Verfahren können die Kabel bisher nur auf kreuzenden Profilen gut abbilden. Daher erfolgen diese Messungen nur punktuell. Zwischen den Messpunkten wird unter Berücksichtigung der Biegesteifigkeit des Kabels interpoliert. Das akustische pangeo system ist zwar für die profilhafte Vermessung entlang der Kabeltrasse konzipiert, kann aber aufgrund der geringen Fächerbreite die Vergrabungstiefe entlang der Kabeltrasse nur punktuell an Stellen optimaler Messbedingungen verfolgen.

Der vorliegenden Erfindung liegt die **Aufgabe** zugrunde, einen Geräteträger zu konstruieren, der für eine ultra-hochauflösende 3D seismische Vermessung geeignet ist. Der Geräteträger soll bei Seegang einsetzbar sein und eine kontinuierliche, der (Kabel-)trasse folgende, Vermessung erlauben. Das akustische Verfahren soll eine Auflösung im Zentimeterbereich ermöglichen und eine ausreichende Eindringung bis zu 10 m in den Meeresboden hinein ermöglichen. In weiteren Anwendungen wird das Verfahren auch für die Detektion anderer Gegenstände im Meeresboden einsetzbar sein. Mit einer Lösung vom Überwasserträger wird die Sensorplattform und Verfahrenstechnologie den Einsatz des Systems in tief geschleppten Vermessungen am Meeresboden ermöglichen. Flach liegende Fluidkanäle oder geologische Einheiten wie z.B. Massiv-Sulfid Vorkommen (eSMS) und vergleichbare Strukturen sind mögliche Vermessungsziele.

Ferner ist es **Aufgabe** der Erfindung die integrative Verfahrenstechnik, bestehend aus einem Geräteträger, einem seegangsunabhängigen Schleppkörper und hierauf spezifisch abgestimmter Ansätze zur Datenverarbeitung, durch die erst die geforderte Genauigkeit von Lageinformationen erarbeitet werden, die einen Einsatz von seismischen Signalfrequenzen im Bereich einiger hundert Hertz (Hz) bis Kilohertz (kHz) erlauben.

Der vorliegenden Erfindung liegt die **Aufgabe** zugrunde, einen Geräteträger zu konstruieren, der für eine ultra-hochauflösende 3D seismische Vermessung geeignet ist. Der Geräteträger soll bei Seegang einsetzbar sein und eine kontinuierliche, der (Kabel-)trasse folgende, Vermessung erlauben. Das akustische Verfahren soll eine Auflösung im Zentimeterbereich ermöglichen und eine ausreichende Eindringung bis zu 10 m in den Meeresboden hinein ermöglichen. In weiteren Anwendungen wird das Verfahren auch für die Detektion anderer Gegenstände im Meeresboden einsetzbar sein. Mit einer Lösung vom Überwasserträger wird die Sensorplattform und Verfahrenstechnologie den Einsatz des Systems in tief geschleppten Vermessungen am Meeresboden ermöglichen. Flach liegende Fluidkanäle oder geologische Einheiten wie z.B. Massiv-Sulfid Vorkommen (eSMS) und vergleichbare Strukturen sind mögliche Vermessungsziele.

Gegenstand der diesseitigen Offenbarung ist die Konstruktion eines seegangsunabhängigen Schleppträgers für eine ultra-hochauflösende 3D Vermessungsplattform. Ein Überwasserkörper nach SWASH (Small Waterplane Area Single Hull) Verfahren (siehe Fa. Abeking und Rasmussen) wird über Leinen, Ketten oder Stempel mit einer Unterwasserplattform verbunden. Anhand von Längen und Befestigungspunkten der Leinen, Ketten oder Stempel sind präzise Lagebestimmungen einzelner Segmente der Unterwasserplattform möglich. Längenveränderliche Stempel können eine zusätzliche Anpassung an Wassertiefen oder Seegangsbedingungen bieten.

**Gelöst** wird diese Aufgabe mit einem Verfahren zur seismischen 3D Vermessung kleiner Objekte (Seekabel und andere Störkörper wie archäologische Bauten oder Felsen) oder gering mächtiger Ablagerungshorizonte (z.B. Massivsulfide) im Meeresboden, gemäß Anspruch 1.

Das seismische dreidimensionale Vermessungsverfahren kleiner Objekte, Seekabel, anderer Störkörper, archäologische Bauten, Felsen oder gering mächtiger Ablagerungshorizonte, Massivsulfide im Meeresboden,
wobei
- ein modularer Geräteträger mit:
   - einem definierten Sensorrahmen mit mindestens zwei, quer zur Schlepprichtung orientierten, Reihen einzelner seismischer und/oder akustischer Signalempfänger oder Gruppen von Signalempfängern,
   - mindestens einer seismischen und/oder akustischen Signalquelle im Zentrum oder mindestens zwei seismischen und/oder akustischen Signalquellen an den Außenseiten des Sensorrahmens, als jeweilige Signalgeber,
   - einem oder mehreren Antrieben oder Steuerklappen, die eine Positionskontrolle des Sensorrahmens im Raum ermöglichen,
   - einer nicht summierenden online Übertragungsvorrichtung zur Übertragung der Messwerte der einzelnen Empfänger zu einem Mutterschiff,
   - einer online Übertragungsvorrichtung zur online Übertragung der Position des Sensorrahmens im Raum gemessen anhand wenigstens eines Bewegungssensors,
   - einer online Steuerungsvorrichtung zur Steuerung und Positionskorrektur des Sensorrahmens im Raum
   ausgebildet ist,
- eine nicht summierende online Übertragung der Messwerte der einzelnen Empfänger zu einem Mutterschiff erfolgt und
- eine online Übertragung der Position des Sensorrahmens im Raum gemessen anhand wenigstens eines Bewegungssensors erfolgt,
ist dadurch gekennzeichnet, dass
der modulare Geräteträger kontinuierlich im oder auf dem Wasser oberhalb des zu analysierenden Meeresboden geschleppt wird, wobei die Signale des mindestens einen Signalgebers und der mindestens zwei Signalempfänger im Bereich >0 Hz bis 20 kHz liegen. Flächenvermessungen können durch Parallelprofile erfolgen, die sich zu einem 3D Datenvolumen ergänzen.

Eine Erkennung der direkten Meeresbodenreflektion und ihres Ghost-Signales in den Messreihen der einzelnen Signalempfänger kann ausgewertet werden, um die aktuelle Tiefenlage des Signalempfängers zu bestimmen.

Die von einem Störkörper als Diffraktion zurück geworfene Energie kann ausgewertet werden, um dessen Lage im Raum zu bestimmen.

Ferner kann die gemessene Laufzeit der Meeresbodenreflektion an einem Sensor und deren Abweichung zu weiteren Sensoren zur Lagebestimmung des Sensors benutzt werden.

Weiter kann über akustische Telemetrie geographische Positionsinformationen des Geräteträgers ermittelt werden.

Die Lage- und Navigationsinformationen können durch einen Lagesensor und GPS Signale erfasst und online an das Mutterschiff übertragen werden.

Ferner können die Lage- und Navigationsinformationen online durch einen Lagesensor und akustische Signale oder eine Long-Baseline Installation erfasst und online an das Mutterschiff übertragen werden.

Es kann eine automatische Auswertung von Navigations- und Lagesensoren auf einem Auftriebskörper oder Geräteträger erfolgen und Steuerungselemente automatisch nachgeregelt werden, um eine vorgegebene Kursfolge sicherzustellen.

Die Lage des Störkörpers kann online ausgewertet und zur Korrektur
- der Steuerelemente des Geräteträgeres
- der schiffseitigen Positionierung des Geräteträgers und/oder
- des Kurses vom Schiff,
interaktiv verwendet werden.

Weiter kann die Seitenauslage des Sensorrahmens so groß bemessen werden, dass bei einer Seekabelvermessung die Trassenverfolgung mit einer 3D Erfassung in nur einem Überlauf erfolgen kann.

Der Trägerrahmen für Signalempfänger kann als feste Einheit oder aus einzelnen Segmenten zusammengesetzt sein.

In einzelne Rahmensegmente können alle Versorgungs- und Signalleitungen steckbar integriert sein.

Der Trägerrahmen kann zudem faltbar ausgebildet sein.

Die Signalquellen, die außerhalb des Rahmenzentrums montiert sind, können zur verbesserten Nutzung des Abstrahlkegels in gekippter Position vorgesehen sein.

Ferner kann eine Schleppverbindung zum Überwasserschiff oder Mutterschiff durch Leinen oder Ketten in gekreuzter Anordnung vorgesehen sein, so dass ein seitliches Verdriften weitgehend unterbleibt.

Insbesondere kann der Geräteträger über Steuerungshilfen verfügen, die einem Verdriften in Wind und Strom entgegen wirken, durch einzelne oder untereinander kombinierte Anwendung von:
- über Kreuz geführten Schleppleinen;
- passiven Elementen, Ruderflächen;
   und/oder
- aktiven Elementen, rotierenden Antriebe.

Der Geräteträger soll bei Seegang einsetzbar sein und eine kontinuierliche, der (Kabel-)trasse folgende, Vermessung erlauben. Das akustische Verfahren soll eine Auflösung im Zentimeterbereich ermöglichen und eine ausreichende Eindringung bis zu 10 m in den Meeresboden hinein ermöglichen. In weiteren Anwendungen wird das Verfahren auch für die Detektion anderer Gegenstände im Meeresboden einsetzbar sein. Mit einer Lösung vom Überwasserträger wird die Sensorplattform und Verfahrenstechnologie den Einsatz des Systems in tief geschleppten Vermessungen am Meeresboden ermöglichen. Flach liegende Fluidkanäle oder geologische Einheiten wie z.B. Massiv-Sulfid Vorkommen (eSMS) und vergleichbare Strukturen sind mögliche Vermessungsziele.

Gegenstand dieser Offenbarung ist ein modular aufgebauter Gitterrahmen, der eine spezifizierte Halterung für Signalquellen und Sensoren für 3D seismische und andere Messverfahren bietet. Ähnlich Leitersprossen ausgeführte Segmente werden mit Sensoren, Kabeln und Systemsteckern ausgestattet. Die Module können untereinander gesteckt werden und so den individuellen Aufbau eines, an die Vermessung angepassten, Geräteträgers ermöglichen.

Weiter **gelöst** wird die Aufgabe mit einem System aus einem seegangsunabhängigen Schleppkörper mit einer Geräteplattform, wobei der Schleppkörper als Überwasserträger einer Geräteplattform dient. Durch die Konstruktion des Schleppkörpers nach dem SWASH (Small Waterplane Area Single Hull) Prinzip (Fa. Abeking & Rasmussen) liegen Auftriebs- und Schwerpunkt unterhalb der Meeresoberfläche und stabilisieren den Schwimmkörper im Seegang.

Das System aus seegangsunabhängigem Schleppkörper und modularem Geräteträger für die ultra-hochauflösende 3D Vermessung kleiner Strukturen im Meeresboden,
wobei
- der Schleppkörper als Überwasserträger des modularen Geräteträgers ausgebildet ist;
- die Konstruktion des Schleppkörpers nach dem Small-Waterplane-Area-Single-Hull-Prinzip ausgebildet ist und Auftriebs- und Schwerpunkt unterhalb der Meeresoberfläche liegen und der Schleppkörper im Seegang stabilisiert wird, wobei die Befestigung des modularen Geräteträgers erfolgt:
   - mit Leinen oder Ketten, die in fester Konfiguration vom Schleppkörper zu festgelegten Haltepunkten am Geräteträger führen,
      oder
   - mit Stempeln, die eine feste Verbindung zwischen Schleppkörper und Geräteträger herstellen,
      oder
   - mit Stempeln, die eine im Abstand veränderliche Verbindung zwischen Schleppkörper und Geräteträger herstellen,
   ist dazu eingerichtet kontinuierlich im oder auf dem Wasser oberhalb des zu analysierenden Meeresboden geschleppt zu werden, wobei die Signale des mindestens einen Signalgebers und der mindestens zwei Signalempfänger im Bereich >0 Hz bis 20 kHz liegen.

Der seegangsunabhängige Schleppkörper ist als Überwasserträger einer Geräteplattform ausgebildet, wobei die Konstruktion des Schwimmkörpers nach dem Small-Waterplane-Area-Single-Hull-Prinzip ausgebildet ist und Auftriebs- und Schwerpunkt unterhalb der Meeresoberfläche liegen und der Schwimmkörper im Seegang stabilisiert wird, wobei die Befestigung des modularen Geräteträgers erfolgt:
- mit Leinen oder Ketten, die in fester Konfiguration vom Schwimmkörper zu festgelegten Haltepunkten am Geräteträger führen,
   oder
- mit Stempeln, die eine feste Verbindung zwischen Schleppkörper und Geräteträger herstellen,
   oder
- mit Stempeln, die eine im Abstand veränderliche Verbindung zwischen Schleppkörper und Geräteträger herstellen.

Ferner kann der Schleppkörper oder Geräteträger über Steuerungshilfen verfügen, die einem Verdriften in Wind und Strom entgegen wirken durch einzelne oder untereinander kombinierte Anwendung von:
- über Kreuz geführte Schleppleinen;
- Rudersegmente;
- Propeller;
- Flettner Antrieb.

Weiter kann parallel zur Schleppverbindung und zur Verbindung mit dem Geräteträger eine Daten- und Versorgungsleitung bestehen, über die Steuerungskommandos für den Signalgeber, Steuerungskommandos für die Signalempfänger, Steuerungskommandos für die Steuerungselemente, Onlineübertragung der Werte der Datenaufzeichnung der Signalempfänger an das Schleppschiff und/oder Onlineübertragung der Werte der Datenaufzeichnung von Navigationshilfen, GPS, Kursinformationen und Lagesensoren, Bewegungssensor, Motion Referenz Unit, an das Schleppschiff übertragbar sind.

Insbesondere kann der Auftrieb so bemessen werden, dass der Geräteträger an einem Tiefseedraht über dem Meeresboden schleppbar ist.

Weiter können geographische Positionsinformationen des Geräteträgers über akustische Telemetrie ermittelt werden.

Es kann insbesondere eine automatische Auswertung von Navigations- und Lagesensoren auf dem Schleppkörper oder Geräteträger ausgeführt werden und Steuerungselemente automatisch um eine Kursfolge sicherzustellen entsprechend angesteuert und geregelt werden.

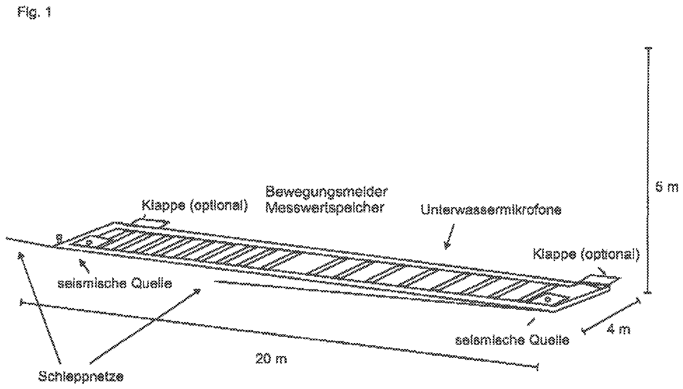

## Patentansprüche

1. Seismisches dreidimensionales Vermessungsverfahren kleiner Objekte, Seekabel, anderer Störkörper, archäologische Bauten, Felsen oder gering mächtiger Ablagerungshorizonte, Massivsulfide im Meeresboden,
wobei
- ein modularer Geräteträger mit:
- einem definierten Sensorrahmen mit mindestens zwei, quer zur Schlepprichtung orientierten, Reihen einzelner seismischer und/oder akustischer Signalempfänger oder Gruppen von Signalempfängern,
- mindestens einer seismischen und/oder akustischen Signalquelle im Zentrum oder mindestens zwei seismischen und/oder akustischen Signalquellen an den Außenseiten des Sensorrahmens, als jeweilige Signalgeber,
- einem oder mehreren Antrieben oder Steuerklappen, die eine Positionskontrolle des Sensorrahmens im Raum ermöglichen,
- einer nicht summierenden online Übertragungsvorrichtung zur Übertragung der Messwerte der einzelnen Empfänger zu einem Mutterschiff,
- einer online Übertragungsvorrichtung zur online Übertragung der Position des Sensorrahmens im Raum gemessen anhand wenigstens eines Bewegungssensors,
- einer online Steuerungsvorrichtung zur Steuerung und Positionskorrektur des Sensorrahmens im Raum
ausgebildet ist,
- eine nicht summierende online Übertragung der Messwerte der einzelnen Empfänger zu einem Mutterschiff erfolgt und
- eine online Übertragung der Position des Sensorrahmens im Raum gemessen anhand wenigstens eines Bewegungssensors erfolgt,
**dadurch gekennzeichnet, dass**
der modulare Geräteträger kontinuierlich im oder auf dem Wasser oberhalb des zu analysierenden Meeresboden geschleppt wird, wobei die Signale des mindestens einen Signalgebers und der mindestens zwei Signalempfänger im Bereich >0 Hz bis 20 kHz liegen.

2. Verfahren nach Anspruch 1,
**dadurch gekennzeichnet, dass**
wenigstens einer der nachfolgenden Schritte zusätzlich erfolgt:
- Durchführen einer Flächenvermessungen durch Parallelprofile derart, dass sich diese zu einem 3D Datenvolumen ergänzen;
und / oder
- Erkennen und Auswerten der direkten Meeresbodenreflektion und ihres Ghost-Signales in den Messreihen der einzelnen Signalempfänger, um die aktuelle Tiefenlage des Signalempfängers zu bestimmen;
und / oder
- Auswerten der von einem Störkörper als Diffraktion zurück geworfenen Energie, um dessen Lage im Raum zu bestimmen;
und / oder
- Benutzen der gemessene Laufzeit der Meeresbodenreflektion an einem Sensor und deren Abweichung zu weiteren Sensoren zur Lagebestimmung des Sensors;
und / oder
- Ermitteln der geographischen Positionsinformationen des Geräteträgers über akustische Telemetrie.

3. Verfahren nach Anspruch 1 oder 2,
**dadurch gekennzeichnet, dass**
- Lage- und Navigationsinformationen durch einen Lagesensor und GPS Signale erfasst und online an das Mutterschiff übertragen werden;
und / oder
- Lage- und Navigationsinformationen online durch einen Lagesensor und akustische Signale oder eine Long-Baseline Installation erfasst und online an das Mutterschiff übertragen werden;
und / oder
- eine automatische Auswertung von Navigations- und Lagesensoren auf einem Auftriebskörper oder Geräteträger erfolgt und Steuerungselemente automatisch nachgeregelt werden, um eine vorgegebene Kursfolge sicherzustellen;
und / oder
- Auswerten der Lage des Störkörpers online und interaktives Korrigieren der Steuerelemente des Geräteträgeres und / oder der schiffseitigen Positionierung des Geräteträgers und / oder des Kurses vom Schiff.

4. Verfahren nach einem der vorangehenden Ansprüche,
**dadurch gekennzeichnet, dass**
der modulare Geräteträger wenigstens ein Merkmal ergänzend erfüllt, nämlich dass:
- die Seitenauslage des Sensorrahmens so groß bemessen ist, dass bei einer Seekabelvermessung die Trassenverfolgung mit einer 3D Erfassung in nur einem Überlauf erfolgen kann;
und / oder
- ein Trägerrahmen für Signalempfänger als feste Einheit oder aus einzelnen Segmenten zusammengesetzt ist
und / oder
- in einzelne Rahmensegmente alle Versorgungs- und Signalleitungen steckbar integriert sind;
und / oder
- der Sensorrahmen faltbar ausgebildet ist;
und / oder
- Signalquellen als Signalgeber, die außerhalb des Rahmenzentrums montiert sind, zur verbesserten Nutzung des Abstrahlkegels in gekippter Position vorgesehen sind;
und / oder
- eine Schleppverbindung zum Überwasserschiff oder Mutterschiff durch Leinen oder Ketten in gekreuzter Anordnung vorgesehen ist;
und / oder
- der Geräteträger über Steuerungshilfen verfügt, die einem Verdriften in Wind und Strom entgegen wirken durch einzelne oder untereinander kombinierte Anwendung von:
- über Kreuz geführte Schleppleinen vorliegen;
und/oder
- passive Elemente, Ruderflächen vorliegen;
und/oder
- aktive Elemente, rotierende Antriebe vorliegen.

5. System aus seegangsunabhängigem Schleppkörper und modularem Geräteträger für die ultra-hochauflösende 3D Vermessung kleiner Strukturen im Meeresboden nach einem der vorangehenden Ansprüche,
wobei
- der Schleppkörper als Überwasserträger des modularen Geräteträgers ausgebildet ist;
- die Konstruktion des Schleppkörpers nach dem Small-Waterplane-Area-Single-Hull-Prinzip ausgebildet ist und Auftriebs- und Schwerpunkt unterhalb der Meeresoberfläche liegen und der Schleppkörper im Seegang stabilisiert wird, wobei die Befestigung des modularen Geräteträgers erfolgt:
- mit Leinen oder Ketten, die in fester Konfiguration vom Schleppkörper zu festgelegten Haltepunkten am Geräteträger führen,
oder
- mit Stempeln, die eine feste Verbindung zwischen Schleppkörper und Geräteträger herstellen,
oder
- mit Stempeln, die eine im Abstand veränderliche Verbindung zwischen Schleppkörper und Geräteträger herstellen
und
dazu eingerichtet kontinuierlich im oder auf dem Wasser oberhalb des zu analysierenden Meeresboden geschleppt zu werden, wobei die Signale des mindestens einen Signalgebers und der mindestens zwei Signalempfänger im Bereich >0 Hz bis 20 kHz liegen.

6. System aus seegangsunabhängigem Schleppkörper und modularem Geräteträger nach Anspruch 5,
**dadurch gekennzeichnet, dass**
der Schleppkörper oder Geräteträger über Steuerungshilfen verfügt, die einem Verdriften in Wind und Strom entgegen wirken durch einzelne oder untereinander kombinierte Anwendung von:
- über Kreuz geführte Schleppleinen;
- Rudersegmente;
- Propeller;
- Flettner Antrieb.

7. System aus seegangsunabhängigem Schleppkörper und modularem Geräteträger nach Anspruch 5 oder 6,
**dadurch gekennzeichnet, dass**
parallel zur Schleppverbindung und zur Verbindung mit dem Geräteträger eine Daten- und Versorgungsleitung besteht, über die Steuerungskommandos für den Signalgeber, Steuerungskommandos für die Signalempfänger, Steuerungskommandos für die Steuerungselemente, Onlineübertragung Werte der Datenaufzeichnung der Signalempfänger an das Schleppschiff und/oder Onlineübertragung der Werte der Datenaufzeichnung von Navigationshilfen, GPS, Kursinformationen und Lagesensoren, Bewegungssensor, Motion Referenz Unit, an das Schleppschiff übertragbar sind.

8. System aus seegangsunabhängigem Schleppkörper und modularem Geräteträger nach Anspruch 5, 6 oder 7,
**dadurch gekennzeichnet, dass**
der Geräteträger an einem Tiefseedraht über dem Meeresboden schleppbar ist, wobei der Auftrieb an die Tiefe angepasst ist.

9. System aus seegangsunabhängigem Schleppkörper und modularem Geräteträger nach einem der Ansprüche 5 bis 8,
**dadurch gekennzeichnet, dass**
geographische Positionsinformationen des Geräteträgers über akustische Telemetrie ermittelbar ist.

10. System aus seegangsunabhängigem Schleppkörper und modularem Geräteträger nach einem der Ansprüche 5 bis 9,
**dadurch gekennzeichnet, dass**
eine automatische Auswertung von Navigations- und Lagesensoren auf dem Schleppkörper oder Geräteträger ausführbar ist und Steuerungselemente zur Sicherstellung der Kursfolge automatisch regelbar sind.

## Claims

1. Seismic three-dimensional measurement method for small objects, submarine cables, other obstacles, archaeological structures, rocks or thin sediment layers, massive sulfides in the seabed,
wherein
- a modular device carrier is formed having:
- a defined sensor frame with at least two rows of individual seismic and/or acoustic signal receivers or groups of signal receivers oriented transverse to the towing direction,
- at least one seismic and/or acoustic signal source in the center or at least two seismic and/or acoustic signal sources on the outer sides of the sensor frame, as respective signal transmitters,
- one or more propulsion units or control flaps that enable positional control of the sensor frame in space,
- a non-summing online transmission device for transmitting the measured values of the individual receivers to a mother ship
- an online transmission device for online transmission of the position of the sensor frame in space, measured using at least one motion sensor,
- an online control device for controlling and correcting the position of the sensor frame in space,
- a non-summing online transmission of the measured values of the individual receivers to a mother ship and
- an online transmission of the position of the sensor frame in space, measured using at least one motion sensor, is carried out,
**characterised in that**
the modular device carrier is towed continuously in or on the water above the seabed to be analysed, wherein the signals of the at least one signal transmitter and of the at least two signal receivers are in the range >0 Hz to 20 kHz.

2. A method according to claim 1,
**characterised in that**
at least one of the following steps is additionally carried out
- performing an area survey by parallel profiles in such a way that these complement each other to form a 3D data volume;
and / or
- detecting and evaluating the direct seabed reflection and its ghost signal in the series of measurements of the individual signal receivers in order to determine the current depth position of the signal receiver;
and / or
- analysing the energy that is reflected back from a disturbing body as diffraction in order to determine its position in space;
and / or
- using the measured travel time of the seabed reflection at a sensor and its deviation from other sensors to determine the position of the sensor;
and / or
- determining the geographical position information of the device carrier using acoustic telemetry.

3. A method according to claim 1,
**characterised in that**
- position and navigation information by means of a position sensor and GPS signals are detected and transmitted online to the mother ship;
and / or
- position and navigation information online by means of a position sensor and acoustic signals or a long-baseline installation are detected and transmitted online to the mother ship;
and / or
- automatic evaluation of navigation and position sensors on a buoyant body or device carrier and automatic adjustment of control elements to ensure a predetermined course sequence;
and / or
- online evaluation of the position of the disruptive body and interactive correction of the control elements of the device carrier and/or the ship-side positioning of the device carrier and/or the course of the ship.

4. A method according to one of the preceding claims,
**characterised in that**
the modular device carrier satisfies at least one additional feature, in particular that
- the lateral projection of the sensor frame is dimensioned so large that, during a submarine cable survey, the route can be tracked with 3D detection in only one overflow;
and / or
- a carrier frame for signal receivers is assembled as a fixed unit or from individual segments
and / or
- all supply and signal lines are integrated into individual frame segments in a pluggable manner;
and / or
- the sensor frame is designed to be foldable; and / or
- signal sources are provided as signal transmitters, which are mounted outside the centre of the frame, for improved use of the radiation cone in a tilted position;
and / or
- a towing connection to the surface vessel or mother ship is provided by lines or chains in a crossed arrangement;
and / or
- the device carrier has steering aids which counteract drifting in wind and current through the individual or combined use of:
- cross-guided towing lines are in place;
and/or
- passive elements, rudder surfaces are in place;
and/or
- active elements, rotating drives are in place.

5. A system comprising a seaway-independent towed structure and a modular device carrier for ultra-high-resolution 3D surveying of small structures in the seabed according to one of the preceding claims,
wherein
- the towed structure is designed as an above-water carrier of the modular device carrier;
- the construction of the towed structure is designed according to the small-waterplane-area-single-hull principle and the centre of buoyancy and centre of gravity are below the sea surface and the towed structure is stabilised in the sea state, with the modular device carrier being attached:
- with lines or chains which lead in a fixed configuration from the towed body to fixed holding points on the device carrier,
or
- with rams which establish a fixed connection between the towed body and the device carrier,
or
- with rams which establish a connection between the towed body and the equipment carrier which is variable in distance
and
is set up to be towed continuously in or on the water above the seabed to be analysed, wherein the signals of the at least one signal transmitter and the at least two signal receivers are in the range >0 Hz to 20 kHz.

6. System comprising a seaway-independent towed structure and a modular device carrier according to claim 5,
**characterised in that**
the towed structure or device carrier has control aids which counteract drifting in wind and current by individual or combined use of:
- cross-guided towlines;
- rudder segments;
- propellers;
- Flettner drive.

7. System comprising a seaway-independent towed structure and a modular device carrier according to claim 5 or 6,
**characterised in that**
a data and supply line is provided parallel to the towing connection and to the connection with the device carrier, via which control commands for the signal transmitter and control commands for the signal receivers are transmitted, control commands for the control elements, online transmission of values of the data recording of the signal receivers to the towing vessel and/or online transmission of the values of the data recording of navigation aids, GPS, course information and position sensors, motion sensor, motion reference unit, can be transmitted to the towing vessel.

8. System comprising a seaway-independent towed structure and a modular device carrier according to claim 5, 6 or 7,
**characterised in that**
the device carrier can be towed on a deep-sea wire above the seabed, the buoyancy being adapted to the depth.

9. System comprising a seaway-independent towed structure and a modular device carrier according to one of the claims 5 to 8,
**characterised in that**
geographical position information of the device carrier can be determined via acoustic telemetry.

10. System comprising a seaway-independent towed structure and a modular device carrier according to one of the claims 5 to 9,
**characterised in that**
an automatic evaluation of navigation and position sensors on the towed body or device carrier can be carried out and control elements for ensuring the course sequence can be controlled automatically.

## Revendications

1. Procédé de repérage tridimensionnel sismique de petits objets, de câbles sous-marins, d'autres corps perturbateurs, de constructions archéologiques, de rochers ou d'horizons de dépôt de faible épaisseur, de sulfures massifs dans le fond marin,
dans lequel
- un support d'appareil modulaire est formé avec:
- un cadre de capteur défini avec au moins deux rangées de récepteurs de signaux sismiques et/ou acoustiques individuels ou de groupes de récepteurs de signaux, orientés transversalement à la direction de remorquage,
- au moins une source de signaux sismiques et/ou acoustiques au centre ou au moins deux sources de signaux sismiques et/ou acoustiques sur les côtés extérieurs du cadre de capteurs, en tant que générateurs de signaux respectifs,
- un ou plusieurs actionneurs ou volets de commande permettant de contrôler la position du cadre de détection dans l'espace,
- d'un dispositif de transmission en ligne non totalisant pour la transmission des valeurs de mesure des différents récepteurs à un vaisseau mère,
- un dispositif de transmission en ligne pour la transmission en ligne de la position du cadre de détection dans l'espace mesurée à l'aide d'au moins un capteur de mouvement,
- un dispositif de commande en ligne pour la commande et la correction de la position du cadre de détection dans l'espace
- une transmission en ligne non totalisante des valeurs de mesure des différents récepteurs est effectuée vers un vaisseau mère et
- une transmission en ligne de la position du cadre de capteur dans l'espace, mesurée à l'aide d'au moins un capteur de mouvement, est effectuée,
**caractérisé en ce que**
le support d'appareil modulaire est remorqué en continu dans ou sur l'eau au-dessus du fond marin à analyser, les signaux de l'au moins un transmetteur de signaux et des au moins deux récepteurs de signaux se situant dans la plage >0 Hz à 20 kHz.

2. Procédé selon la revendication 1,
**caractérisé en ce que**
au moins une des étapes suivantes est effectuée en plus:
- réalisation d'une mesure de surface par des profils parallèles de telle sorte qu'ils se complètent pour former un volume de données 3D;
et/ou
- détection et évaluation de la réflexion directe sur le fond marin et de son signal fantôme dans les séries de mesures des différents récepteurs de signaux afin de déterminer la profondeur actuelle du récepteur de signaux;
et/ou
- évaluer l'énergie renvoyée par un corps perturbateur sous forme de diffraction afin de déterminer sa position dans l'espace;
et/ou
- utiliser le temps de propagation mesuré de la réflexion du fond marin sur un capteur et son écart par rapport à d'autres capteurs pour déterminer la position du capteur;
et/ou
- déterminer les informations de position géographique du support de l'appareil par télémétrie acoustique.

3. Procédé selon la revendication 1 ou 2,
**caractérisé en ce que**
- des informations de position et de navigation sont acquises par un capteur de position et des signaux GPS et transmises en ligne au vaisseau mère;
et/ou
- des informations de position et de navigation sont collectées en ligne par un capteur de position et des signaux acoustiques ou une installation Long-Baseline et transmises en ligne au vaisseau mère;
et/ou
- une évaluation automatique des capteurs de navigation et de position est effectuée sur un corps flottant ou un support d'appareils et les éléments de commande sont automatiquement réajustés afin de garantir une séquence de cap prédéfinie;
et/ou
- évaluation en ligne de la position du corps perturbateur et correction interactive des éléments de commande du support d'appareils et/ou du positionnement du support d'appareils côté navire et/ou du cap du navire.

4. Procédé selon l'une des revendications précédentes,
**caractérisé en ce que**
le support d'appareils modulaire satisfait à au moins une caractéristique complémentaire, à savoir que:
- l'exposition latérale du cadre de capteur est dimensionnée de manière à ce que, lors d'une mesure de câble sous-marin, le suivi du tracé puisse être effectué avec une saisie 3D en un seul débordement;
et/ou
- un cadre de support pour les récepteurs de signaux est constitué d'une unité fixe ou de segments individuels
et/ou
- toutes les lignes d'alimentation et de signaux sont intégrées de manière enfichable dans des segments individuels du cadre;
et/ou
- le cadre du capteur est conçu de manière pliable;
et/ou
- des sources de signaux sont prévues en tant que générateurs de signaux, montés en dehors du centre du cadre, pour une meilleure utilisation du cône de rayonnement en position basculée;
et/ou
- une liaison de remorquage vers le navire de surface ou le navire-mère est prévue par des lignes ou des chaînes disposées en croix;
et/ou
- le porte-engin dispose d'aides à la navigation qui s'opposent à la dérive dans le vent et le courant par l'utilisation individuelle ou combinée de:
- des lignes de traîne croisées;
et/ou
- des éléments passifs, des surfaces de gouvernail sont présents;
et/ou
- des éléments actifs, des entraînements rotatifs.

5. Système de corps remorqué indépendant de la houle et support d'appareil modulaire pour la mesure 3D à ultra-haute définition de petites structures sur les fonds marins selon l'une des revendications précédentes,
où
- le corps remorqué est conçu comme support de surface du support d'appareil modulaire;
- la construction du corps remorqué est réalisée selon le principe du Small-Waterplane-Area-Single-Hull et que la flottabilité et le centre de gravité se trouvent en dessous de la surface de la mer et que le corps remorqué est stabilisé dans la houle, la fixation du support d'appareil modulaire étant effectuée:
- soit par des lignes ou des chaînes qui, dans une configuration fixe, partent du corps remorqué et aboutissent à des points de fixation définis sur le support d'engin,
ou
- soit au moyen de poinçons qui assurent une liaison fixe entre le corps remorqué et le support d'appareils,
ou
- soit avec des poinçons qui établissent une liaison à distance variable entre le corps remorqué et le porte-outils
et
adapté pour être remorqué en continu dans ou sur l'eau au-dessus du fond marin à analyser, les signaux d'au moins un émetteur de signaux et d'au moins deux récepteurs de signaux se situant dans la plage >0 Hz à 20 kHz.

6. Système composé d'un corps de remorquage indépendant de l'état de la mer et d'un support d'appareil modulaire selon la revendication 5,
**caractérisé en ce que**
le corps remorqué ou le support d'appareils dispose d'aides à la conduite qui s'opposent à une dérive dans le vent et le courant par l'utilisation individuelle ou combinée de:
- des lignes de remorquage croisées;
- des segments de gouvernail;
- Hélices de propulsion;
- Propulsion Flettner.

7. Système composé d'un corps de remorquage indépendant de l'état de la mer et d'un support d'appareils modulaire selon la revendication 5 ou 6,
**caractérisé en ce que**
il existe, parallèlement à la liaison de remorquage et à la liaison avec le support d'appareils, une ligne de données et d'alimentation par laquelle peuvent être transmises des commandes de commande pour le générateur de signaux, des commandes de commande pour les récepteurs de signaux, des commandes de commande pour les éléments de commande, la transmission en ligne de valeurs de l'enregistrement de données des récepteurs de signaux au bateau de remorquage et/ou la transmission en ligne de valeurs de l'enregistrement de données d'aides à la navigation, GPS, informations de cap et capteurs de position, capteur de mouvement, unité de référence de mouvement, au bateau de remorquage.

8. Système composé d'un corps remorqué indépendant de l'état de la mer et d'un support d'appareils modulaire selon la revendication 5, 6 ou 7,
**caractérisé en ce que**
le support d'appareils peut être remorqué sur un câble en eau profonde au-dessus du fond marin, la flottabilité étant adaptée à la profondeur.

9. Système composé d'un corps remorqué indépendant de l'état de la mer et d'un support d'appareils modulaire selon l'une des revendications 5 à 8,
**caractérisé en ce que**
les informations de position géographique du support d'appareils peuvent être déterminées par télémétrie acoustique.

10. Système composé d'un corps remorqué indépendant du trajet en mer et d'un support d'appareils modulaire selon l'une des revendications 5 à 9,
**caractérisé en ce que**
une évaluation automatique de capteurs de navigation et de position peut être effectuée sur le corps remorqué ou le support d'appareils et des éléments de commande peuvent être réglés automatiquement pour garantir la succession des caps.
